# EUROPEAN PATENT APPLICATION

(11) **EP 4 737 015 A1**
(43) Date of publication of application: **06.05.2026**
(21) Application number: 25787081.6
(22) Date of filing: 04.04.2025
(51) Int. Cl.: B05C 5/02, B05C 11/10, H01M 4/04

(54) **DIE COATER**

(30) Priority: 08.04.2024 KR 20240047190
(71) Applicant: LG Energy Solution, Ltd., Seoul 07335 (KR)
(72) Inventor: PARK, Min Gu, Daejeon 34122 (KR); MOON, Young Gyu, Daejeon 34122 (KR); CHOI, Min Hyuck, Daejeon 34122 (KR); KIM, Guk Tae, Daejeon 34122 (KR); LIM, Chae Ryeun, Daejeon 34122 (KR); KIM, Min Cheol, Daejeon 34122 (KR)
(74) Representative: Plasseraud IP
(86) International application number: PCT/KR2025/004529
(87) International publication number: WO 2025/216489

(57) **Abstract**

Embodiments of the present disclosure provide a die coater. The die coater includes a first die including a land portion and a manifold having a certain depth from the land portion and configured to accommodate an electrode slurry, a body shim coupled to the first die and including a body extending in a first direction and wings protruding in a second direction, which is perpendicular to the first direction, from an end portion of the body in the first direction, a spacer shim coupled to the first die and partially covering the manifold, and a shim fixing pin configured to fix the spacer shim to the land portion of the first die, the spacer shim includes a slot into which the shim fixing pin is inserted, and the shim fixing pin includes a shank portion and a flange connected to the shank portion and is configured to be rotated with respect to the spacer shim with the shank portion as an axis.

## Description

### [Technical Field]

The present disclosure relates to a die coater.

This application claims the benefit of priority based on Korean Patent Application No. 10-2024-0047190, filed on April 8, 2024, and the entire content of the Korean patent application is incorporated herein by reference.

### [Background Art]

Secondary batteries can be charged and discharged a plurality of times unlike primary batteries. Secondary batteries are widely used as energy sources for various types of wireless devices such as handsets, laptop computers, and cordless vacuum cleaners. Recently, the main use of secondary batteries is moving from mobile devices to mobility, as manufacturing costs per unit capacity of secondary batteries drastically decrease due to improvements in energy density and economies of scale and a range of battery electric vehicles (BEVs) increases to the same level as fuel vehicles.

Electrodes of a secondary battery are most important components of the secondary battery in terms of an energy density. The electrodes of the secondary battery may be formed through a coating process, a roll press process, a drying process, a slitting process, and a notching process. Among these processes, the coating process is a process of applying a coating material containing an active material onto an electrode plate and may be performed by a die coater.

### [Disclosure]

### [Technical Problem]

The present disclosure is directed to providing a die coater with improved coating performance.

### [Technical Solution]

Embodiments of the present disclosure provide a die coater. The die coater includes a first die including a land portion and a manifold having a certain depth from the land portion and configured to accommodate an electrode slurry, a body shim coupled to the first die and including a body extending in a first direction and wings protruding in a second direction, which is perpendicular to the first direction, from an end portion of the body in the first direction, a spacer shim coupled to the first die and partially covering the manifold, and a shim fixing pin configured to fix the spacer shim to the land portion of the first die, the spacer shim includes a slot into which the shim fixing pin is inserted, and the shim fixing pin includes a shank portion and a flange connected to the shank portion and is configured to be rotated with respect to the spacer shim with the shank portion as an axis.

A long side of the slot may have a first length, a short side of the slot may have a second length less than the first length, and a maximum horizontal length of the flange may be less than the first length and greater than the second length.

A planar shape of the flange may be an oval shape.

A planar shape of the flange may be a circular shape, and a center of the flange and a center of the shank portion may be spaced apart from each other in a direction parallel to the flange.

A planar shape of the flange may be a polygonal shape.

The center of gravity of the flange and the center of the shank portion may be spaced apart from each other in the direction parallel to the flange.

A planar shape of the flange may be a closed round shape with a variable radius.

The center of gravity of the flange and the center of the shank portion may be spaced apart from each other in the direction parallel to the flange.

The flange may include a first pole and a second pole, and a distance between the first and second poles may be a maximum horizontal distance of the flange.

A rate of change according to an angle of the radius at the first pole and the second pole may be zero.

A horizontal distance between the first pole and the center of the shank portion may be different from a horizontal distance between the second pole and the center of the shank portion.

Relative positions of the first die and the spacer shim may be adjusted by the rotation of the shim fixing pin.

Example embodiments provide a die coater. The die coater includes a first die with a manifold, a spacer shim coupled to the first die and partially covering the manifold, and a shim fixing pin configured to fix the spacer shim to a land portion of the first die, the spacer shim includes a slot into which the shim fixing pin is inserted, the shim fixing pin includes a shank portion and a flange connected to the shank portion, and a center of gravity of the flange and a center of the shank portion are spaced apart from each other in a direction parallel to the flange.

A long side of the slot may have a first length, a short side of the slot may have a second length less than the first length, and a maximum horizontal length of the flange may be less than the first length and greater than the second length.

### [Advantageous Effects]

According to embodiments of the present disclosure, a position of a spacer shim relative to a lower die in a slurry discharge direction can be adjusted by rotation of a shim fixing pin. Accordingly, the leakage of an electrode slurry can be mitigated or prevented, and the reliability and yield of a coating process can be improved.

Effects achievable from embodiments of the present disclosure are not limited to the above-described effects, and other effects that are not described herein will be clearly derived and understood by those of ordinary skill in the art to which the embodiments of the present disclosure pertain from the following description. That is, unintended effects achieved when the embodiments of the present disclosure are implemented are derivable by those of ordinary skill in the art from the embodiments of the present disclosure.

### [Brief Description of the Drawings]

FIG. 1 illustrates secondary battery manufacturing equipment according to embodiments.
FIG. 2 is a side view of a die coater according to embodiments, in which a side cross section of the die coater is shown.
FIG. 3 is an exploded perspective view for describing a die coater according to embodiments.
FIG. 4 is a partially exploded perspective view of a die coater, in which a part of FIG. 3 is enlarged.
FIG. 5 is a plan view of a spacer shim according to embodiments.
FIG. 6 is a perspective view of a shim fixing pin according to embodiments.
FIG. 7 is a plan view of a shim fixing pin according to embodiments.
FIG. 8 is a plan view of a shim fixing pin according to embodiments.
FIGS. 9 and 10 are plan views for describing an effect of a die coater according to embodiments.
FIG. 11 is a plan view of a shim fixing pin according to embodiments.
FIG. 12 is a plan view of a shim fixing pin according to embodiments.

### [Best Mode]

Hereinafter, embodiments of the present disclosure will be described in detail with reference to the accompanying drawings. Before describing embodiments of the present disclosure, the terms or expressions used in the present specification and claims should not be construed as being limited to as generally understood or as defined in commonly used dictionaries, and should be understood according to meanings and concepts corresponding to the present disclosure on the basis of the principle that the inventor(s) of the application can appropriately define the terms or expressions to optimally explain the present disclosure.

Therefore, embodiments set forth herein and configurations illustrated in the drawings are only examples of the present disclosure and do not reflect all the technical ideas of the present disclosure and thus it should be understood that various equivalents and modifications that replace the configurations would have been made at the filing date of the present application.

Well-known configurations or functions related to describing the present disclosure are not described in detail when it is determined that they would obscure the subject matter of the present disclosure due to unnecessary detail.

Because embodiments of the present disclosure are provided to more fully explain the present disclosure to those of ordinary skill in the art, the shapes, sizes, etc. of components illustrated in the drawings may be exaggerated, omitted, or schematically illustrated for clarity. Therefore, it should not be understood that the sizes or proportions of components fully reflect the actual sizes or proportions thereof.

### (First Embodiment)

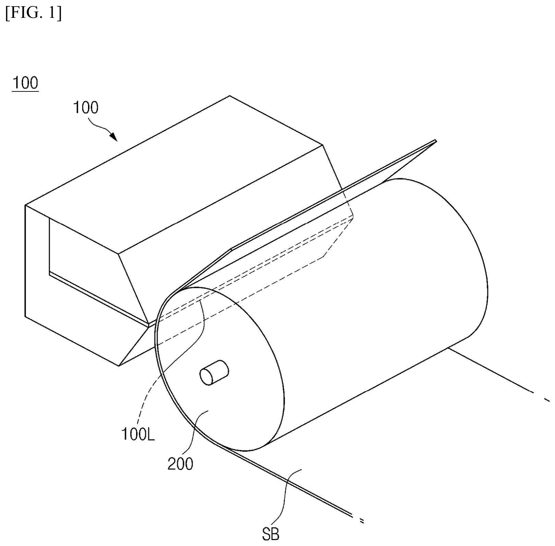

FIG. 1 illustrates secondary battery manufacturing equipment 10 according to embodiments.

According to embodiments, the secondary battery manufacturing equipment 10 may include a die coater 100 and rolls 200. The die coater 100 may be configured to discharge a coating material. A portion of the die coater 100 from which the coating material is discharged may be referred to as a lip 100L. According to embodiments, the die coater 100 may be configured to coat a current collector SB with the coating material. The coating material may include an electrode slurry and an insulating material. The die coater 100 may be configured to simultaneously provide the electrode slurry and the insulating material on the current collector SB.

The electrode slurry may be used to manufacture an electrode of a secondary battery. The electrode slurry may include an electrode active material, a conductive additive, a binder, and a solvent. The electrode slurry may be prepared by dissolving the electrode active material, the conductive additive, the binder, etc. in the solvent. The solvent may disperse the electrode active material and the like. The solvent may be an aqueous solvent or a nonaqueous solvent. The solvent may include dimethyl sulfoxide (DMSO), isopropyl alcohol, N-methylpyrrolidone (NMP), acetone, water or a mixture thereof. An amount of the solvent to be used may be determined based on target viscosity of the electrode slurry. Parameters that determine the amount of the solvent to be used include a thickness to which the electrode slurry is to be applied, manufacturing yield, and workability.

A positive electrode active material is a material that may cause an electrochemical reaction. The positive electrode active material may be a lithium transition metal oxide. For example, the positive electrode active material may include: a layered compound substituted with one or more transition metal, e.g., lithium cobalt oxide (LiCoO₂) or lithium nickel oxide (LiNiO₂); lithium manganese oxide substituted with one or more transition metal; lithium nickel-based oxide expressed by a chemical formula of LiNi_{1-y}M_{y}O₂ (here, M is Co, Mn, Al, CU, Fe, Mg, B, Cr, Zn or Ga, and 0.01≤y≤0.7); lithium nickel cobalt manganese compound oxide expressed by a chemical formula of Li_{1+z}Ni_{b}Mn_{c}Co_{1-(b+c+d)}M_{d}O₍₂₋ₑ₎Aₑ, e.g., Li_{1+z}Ni_{1/3}Co_{1/3}Mn_{1/3}O₂ or Li_{1+zN}i_{0.4}Mn_{0.4}CO_{0.2}O₂ (here, -0.5≤z≤0.5, 0.1≤b≤0.8, 0.1≤c≤0.8, 0≤d≤0.2, 0≤e≤0.2, b+c+d<1, M is Al, Mg, Cr, Ti, Si or Y, and A is F, P or Cl); or olivine-based lithium metal phosphate expressed by a chemical formula of Li₁₊ₓM_{1-y}M'_{y}PO_{4-z}X_{z} (here, M is a transition metal, and more particularly, Fe, Mn, Co or Ni, M' is Al, Mg or Ti, X is F, S or N, -0.5≤x≤+0.5, 0≤y≤0.5, and 0≤z≤0.1).

A negative electrode active material may include, for example, carbon such as non-graphitized carbon or graphite-based carbon. The negative electrode active material may include, for example, a metal composite oxide such as LiₓFe₂O₃ (0≤x≤1), LixWO₂ (0≤x≤1), or SnₓMe₁₋ₓMe'_{y}O_{z} (here, Me is Mn, Fe, Pb, or Ge, Me' is Al, B, P, Si, a Group I element, a Group II element or a Group III element of the periodic table, or halogen, 0<x≤1, 1≤y≤3, and 1≤z≤8). The negative electrode active material may include, for example, lithium metal, lithium alloy, silicon-based alloy, or tin-based alloy. The negative electrode active material may include, for example, a metal oxide such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄, or Bi₂O₅. The negative electrode active material may include, for example, a conductive polymer such as polyacetylene, a Li-Co-Ni-based material, etc.

The conductive additive may have conductivity without causing a chemical change in a finally manufactured secondary battery. For example, the conductive additive may include: graphite such as natural graphite or artificial graphite; carbon black such as acetylene black, Ketjen black, channel black, furnace black, lamp black or thermal black; conductive fibers such as carbon fibers or metal fibers; metal powder such as carbon fluoride, aluminum or nickel powder; conductive whiskey such as zinc oxide or potassium titanate; conductive metal oxide such as titanium oxide; polyphenylene derivatives, or the like.

The binder may enhance a binding force between the active material and the conductive additive and a binding force thereof with an electrode plate. The binder may include, for example, polyvinylidene fluoride, polyvinyl alcohol, carboxymethylcellulose (CMC), starch, hydroxypropylcellulose, regenerated cellulose, polyvinylpyrrolidone, tetrafluoroethylene, polyethylene, polypropylene, ethylene-propylene-propylene-diene ter polymer (EPDM), sulfonated EPDM, styrene-butyrene rubber, fluorine rubber, various copolymers, or the like.

A thickness of a positive electrode current collector may be in a range of about 3 µm to about 500 µm. The positive electrode current collector may have high conductivity without causing a chemical change in a finally manufactured secondary battery. The positive electrode current collector may include, for example, stainless steel, nickel, titanium, baked carbon, or aluminum. The positive electrode current collector may include stainless steel surface-treated with carbon, nickel, titanium, silver, or the like. A surface of the positive electrode current collector may include a fine uneven structure to increase the adhesion of the active material. The positive electrode current collector may be in the form of a film, sheet, foil, net, porosity, foam or non-woven fabric.

A thickness of a negative electrode current collector may be in a range of about 3 µm to about 500 µm. The negative electrode current collector may have high conductivity without causing a chemical change in a finally manufactured secondary battery. The negative electrode current collector may include copper, stainless steel, aluminum, nickel, titanium, baked carbon, or aluminum-cadmium alloy. The negative electrode current collector may include stainless steel surface-treated with carbon, nickel, titanium, silver, or the like. A surface of the negative electrode current collector may include a fine uneven structure to increase the adhesion of the active material. The negative electrode current collector may be in the form of a film, sheet, foil, net, porosity, foam or non-woven fabric.

After the coating process is performed, a roll press process, a drying process, a slitting process, and a notching process may be performed. The roll press process may be performed by roll press equipment including pressing rolls. By performing the roll press process, a bonding force between a surface of the electrode plate and the active material may be enhanced. Therefore, the movement of lithium ions in the electrode may be promoted, and an output and nerformance of a finally manufactured secondary battery may be improved.

The drying process of the electrode may be performed by supplying dry air into a drying chamber or supplying heat energy to the electrode in a chamber through infrared rays, high-temperature air or the like. In the drying process, the uniformity and reliability of the electrode may be improved by removing moisture from the electrode.

The slitting process is a process of dividing the electrode into a plurality of electrodes having a smaller width in a transverse direction. Thereafter, the electrode may be cut into a shape with a tab by the notching process.

### (Second embodiment)

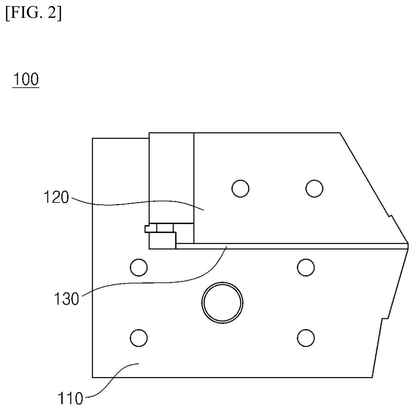

FIG. 2 is a side view of a die coater 100 according to embodiments, in which a side cross section of the die coater 100 is shown.

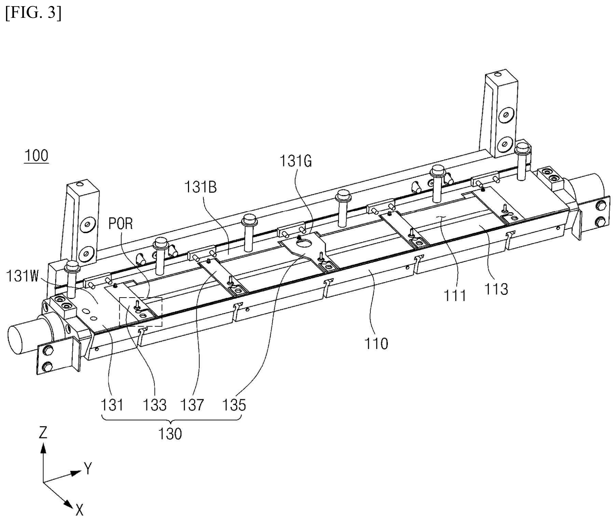

FIG. 3 is an exploded perspective view for describing the die coater 100 according to embodiments. In FIG. 3, a second die 120 is omitted.

Referring to FIGS. 2 and 3, the die coater 100 may include a first die 110, a second die 120, and a shim 130.

Hereinafter, the technical idea of the present disclosure will be described with respect to an embodiment in which the first die 110 and the second die 120 are separate elements as described above. Based on the description herein, technicians of ordinary skill in the art will be able to easily derive an embodiment in which the first die 110 and the second die 120 are integrated to form an integral die.

The first die 110 may include a manifold 111 and an electrode slurry supply path connected to the manifold 111. An electrode slurry may flow into the manifold 111 through the electrode slurry supply path. The manifold 111 may be an empty space configured to accommodate the electrode slurry. After the manifold 111 is filled with the electrode slurry, the electrode slurry may be discharged to the outside of the die coater 100. The electrode slurry may be discharged from the manifold 111 to the outside through slits defined by the shim 130 and a land portion 113.

The manifold 111 may have a well shape with a certain depth from the land portion 113. The manifold 111 may include an inclined surface and thus the electrode slurry may be stably discharged from the die coater 100.

The shim 130 may be interposed between the first die 110 and the second die 120. The first die 110 may be in contact with a lower surface of the shim 130. The second die 120 may be in contact with an upper surface of the shim 130. The shim 130 may include a body shim 131 and spacer shims 133, 135 and 137.

The body shim 131 may include a body 131B and wings 131W. The body 131B may extend in a Y-axis direction. The body 131B may be a plate whose width in an X-axis direction is less than a length thereof in the Y-axis direction. Here, the X-axis direction may be a direction in which the electrode slurry is discharged, and the Y-axis direction may be substantially perpendicular to the X-axis direction. The body shim 131 may be substantially parallel to each of the X-axis direction and the Y-axis direction and be substantially perpendicular to a Z-axis direction. The wings 131W may be connected to an end portion of the body 131B in the Y-axis direction. The wings 131W may protrude from the body 131B in the X-axis direction.

The body 131B may include a plurality of grooves 131G. Each of the plurality of grooves 131G may be in a side of the body 131B adjacent to the manifold 111 (e.g., a side thereof overlapping the manifold 111) among sides of the body 131B parallel to the Y-axis direction. Each of the plurality of grooves 131G may be recessed inward from the sides of the body 131B parallel to the Y-axis direction.

The plurality of grooves 131G may correspond to the spacer shims 133, 135 and 137. The plurality of grooves 131G may expose a portion of the first die 110. Each of the plurality of spacer shims 133, 135 and 137 may be partially inserted into a corresponding one of the plurality of grooves 131G. The plurality of spacer shims 133, 135 and 137 may be fixed to a portion of the first die 110 exposed via the plurality of grooves 131G by a method such as bolting.

According to embodiments, a width of each of the plurality of grooves 131G in the Y-axis direction may be different from a width of a corresponding one of the spacer shims 133, 135 and 137 in the Y-axis direction. According to embodiments, the width of each of the plurality of grooves 131G in the Y-axis direction may be greater than the width of the corresponding one of the spacer shims 133, 135 and 137 in the Y-axis direction. Accordingly, the plurality of grooves 131G may not only guide the coupling of the spacer shims 133, 135 and 137 but also provide a degree of freedom to the spacer shims 133, 135 and 137 in the Y-axis direction, so that positions of the spacer shims 133, 135 and 137 may be precisely adjusted in the Y-axis direction.

The spacer shims 133, 135 and 137 may be interposed between the wings 131W in the Y-axis direction. The spacer shims 133, 135 and 137 may overlap the wings 131W in the Y-axis direction.

According to embodiments, the spacer shims 133 may be adjacent to edges of the shim 130 in the Y-axis direction. According to embodiments, the spacer shims 133 may be adjacent to the wings 131W. According to embodiments, the spacer shims 133 may be in contact with the wings 131W but embodiments are not limited thereto. Each of the spacer shims 133 may be referred to as an edge spacer shim or a first spacer shim.

According to embodiments, the spacer shim 135 may be on a central part of the shim 130 in the Y-axis direction. According to embodiments, the spacer shim 135 may be interposed between the spacer shims 133. The spacer shim 135 may be referred to as a center spacer shim or a second spacer shim.

According to embodiments, the spacer shims 137 may be interposed between the spacer shims 133 and the spacer shim 135. Each of the spacer shims 137 may be referred to as an intermediate spacer shim or a third spacer shim.

The spacer shims 133, 135 and 137 may partially cover the manifold 111. The spacer shims 133, 135 and 137 may overlap the manifold 111 in the Z-axis direction. In FIG. 3, the spacer shims 133, 135 and 137 may divide the manifold 111 into four regions and thus the die coater 100 may be configured to form four retaining lanes by performing a coating process once.

Technicians of ordinary skill in the art will be able to easily derive a die coater configured to form various numbers of retaining lanes, e.g., one, two, eight, sixteen or thirty two retaining lanes, based on the description herein. For example, a die coater configured to form eight retaining lanes may include a shim that includes two edge spacer shims, one center spacer shim, and six intermediate spacer shims.

Each of the spacer shims 133, 135 and 137 may include one or more insulating flow paths. More specifically, each of the spacer shims 133 on an edge portion of the shim 130 may include one insulating flow path, and each of the spacer shims 135 and 137 between the spacer shims 133 may include two insulating flow paths. Accordingly, an insulating coating covering the electrode slurry may be provided on an edge of each of retaining parts.

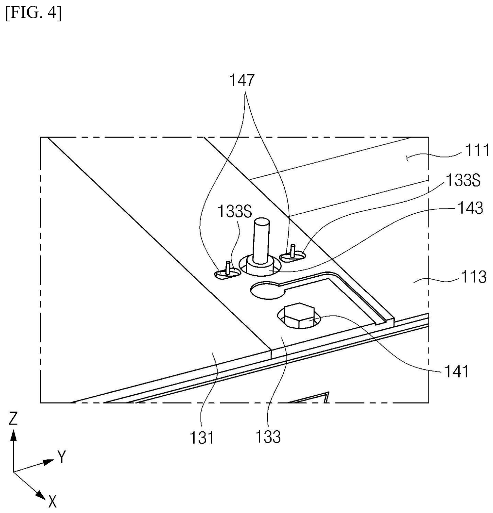

FIG. 4 is a partially exploded perspective view of the die coater 100, in which a part POR of FIG. 3 is enlarged.

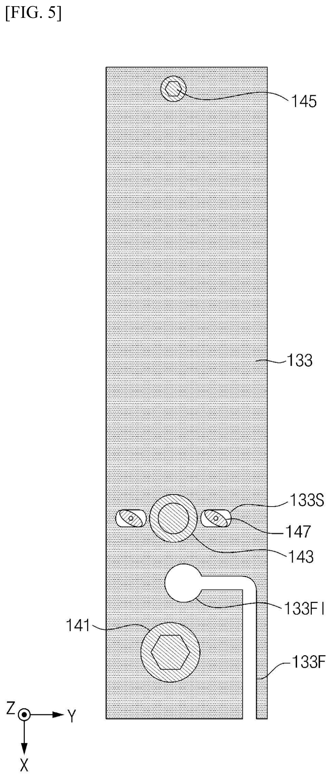

FIG. 5 is a plan view of a spacer shim 133 according to embodiments.

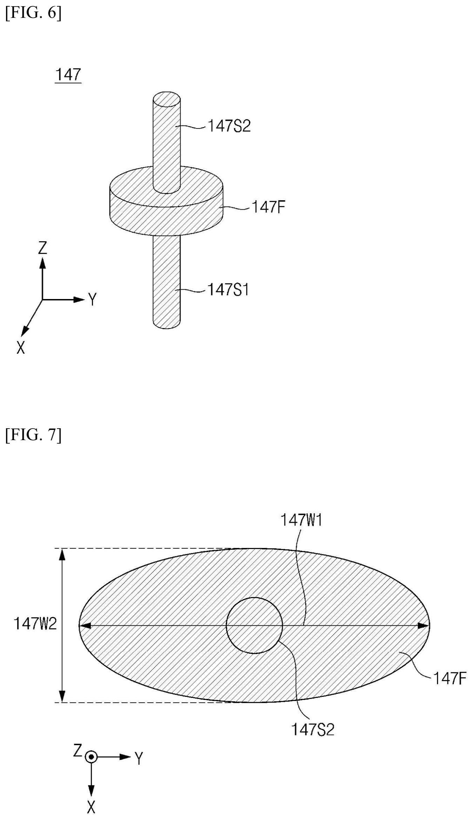

FIG. 6 is a perspective view of a shim fixing pin 147 according to embodiments.

FIG. 7 is a plan view of the shim fixing pin 147 according to embodiments.

Referring to FIGS. 3 to 7, the die coater 100 may further include shim fixing devices 141, 143, and 145 and shim fixing pins 147.

The shim fixing devices 145 may fix the spacer shims 133 on the portion of the first die 110 exposed via the groove 131G. Each of the spacer shims 133 may include a fastening hole corresponding to one of the shim fixing devices 145 (i.e., a fastening hole into which one of the shim fixing devices 145 is inserted and which is penetrated by one of the shim fixing devices 145).

The shim fixing devices 141 and the shim fixing pins 143 may be partially inserted into the land portion 113 of the first die 110. The shim fixing devices 141 and the shim fixing pins 143 may be configured to fix the spacer shims 133 to the land portion 113 of the first die 110. The shim fixing devices 141 may be, for example, bolts but are not limited thereto.

The shim fixing pins 143 may be, for example, bidirectional pins. Accordingly, the shim fixing pins 143 may be configured to fix the second die 120 to the shim 130, in addition to the first die 110. Each of the spacer shims 133 may include fastening holes corresponding to the shim fixing devices 141 and the shim fixing pins 143 (i.e., fastening holes into which the shim fixing devices 141 and the shim fixing pins 143 are inserted and which are penetrated by the shim fixing devices 141 and the shim fixing pins 143).

Each of the shim fixing pins 147 may include a first shank portion 147S1, a second shank portion 147S2, and a flange 147F. The flange 147F may be interposed between the first and second shank portions 147S1 and 147S2. A width of the flange 147F may be greater than a width of each of the first and second shank portions 147S1 and 147S2. A cross-sectional area of the flange 147F (e.g., a cross-section thereof perpendicular to the Z-axis direction) may be greater than a cross-sectional area of each of the first and second shank portions 147S1 and 147S2 (e.g., a cross-section thereof perpendicular to the Z-axis direction) .

According to embodiments, each of the first shank portion 147S1 and the second shank portion 147S2 may be a cylindrical pin with a height parallel to the Z-axis direction. The first shank portion 147S1 may be inserted into the first die 110, and the second shank portion 147S2 may be inserted into the second die 120. The second shank portion 147S2 may be used to adjust a direction of the shim fixing pins 147 (i.e., to rotate the shim fixing pins 147) before coupled to the second die 120.

According to embodiments, the first shank portion 147S1 and the second shank portion 147S2 may overlap each other in the Z-axis direction. According to embodiments, the first shank portion 147S1 and the second shank portion 147S2 may have substantially the same horizontal cross-section (e.g., a cross-section perpendicular to the Z-axis direction). Accordingly, the center of the first shank portion 147S1 on an XY plane and the center of the second shank portion 147S2 on the XY plane may overlap each other in the Z-axis direction. Here, the XY plane may be a plane substantially parallel to each of the X-axis direction and Y-axis direction and be substantially perpendicular to the Z-axis direction.

According to embodiments, rotation of the flange 147F about a Z-axis may be asymmetric rotation. That is, the rotation of the flange 147F about the Z-axis may be recognized from the outside (e.g., by an operator). According to embodiments, a planar shape of the flange 147F may not be a circular shape. According to embodiments, the planar shape of the flange 147F may include a variable diameter. According to embodiments, the planar shape of the flange 147F may include a non-uniform diameter. According to embodiments, the planar shape of the flange 147F may be an oval shape.

The spacer shims 133 may include slots 133S corresponding to the shim fixing pins 147. The first shank portions 147S1 of the shim fixing pins 147 may be inserted into the first die 110 through the slots 133S of the spacer shims 133. The flange 147F of each of the shim fixing pins 147 may be inserted into a corresponding one of the slots 133S of the spacer shims 133.

The slots 133S may each include a relatively long side and a relatively short side. According to embodiments, the long sides of the slots 133S may be parallel to the Y-axis direction, and the short sides of the slots 133S may be parallel to the X-axis direction, but embodiments are not limited thereto. A length of the long side of each of the slots 133S may be greater than a length 147W1 of a long side of the flange 147F, and a length of the short side of each of the slots 133S may be less than the length 147W1 of the long side of the flange 147F.

Due to the dimensions of the slots 133S and the flanges 147F described above, the shim fixing pin 147 may be configured to be rotated with the first shank portion 147S1 and/or the second shank portion 147S2 as an axis. Accordingly, during assembling of the die coater 100, a direction of the flange 147F (e.g., a direction that the long side thereof faces) may be adjusted by an operator's manipulation to adjust positions of the spacer shim 133 and the first die 110 in the X-axis direction.

A spacer shim of a conventional die coater has a degree of freedom in the Y-axis direction during assembling of the die coater but does not have a degree of freedom in the X-axis direction. Accordingly, even when there is a manufacturing error in a length of the spacer shim of the die coater in the X-axis direction, relative positions of the spacer shim and a lip of the die coater cannot be adjusted.

According to embodiments, relative positions of the spacer shims 133 and the first die 110 in the X-axis direction are adjustable to align the spacer shims 133 with a lip 100L of the die coater (see FIG. 1) in the X-axis direction, thereby preventing undesired leakage of the electrode slurry in the coating process and increasing the yield and reliability of the coating process.

Insulating flow paths 133F of the spacer shims 133 may provide a path for discharging an insulating liquid. Widths of inlets 133FI of the insulating flow paths 133F may be greater than those of the insulating flow paths 133F, thus allowing coating with the insulating liquid stably.

The spacer shims 135 and 137 may also include slots for coupling with the shim fixing pins 147 and a coupling relationship between the spacer shims 135 and 137 and the shim fixing pins 147 is the same as a coupling relationship between the spacer shims 133 and the shim fixing pins 147, and thus, redundant description thereof is omitted here.

### (Third Embodiment)

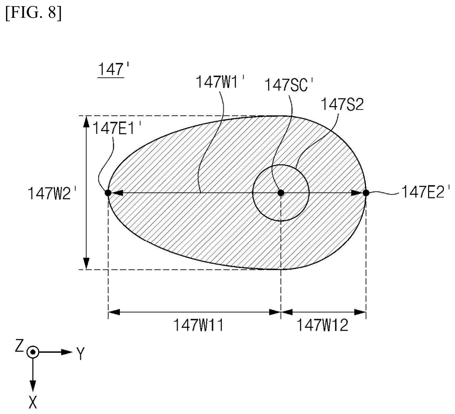

FIG. 8 is a plan view for describing a shim fixing pin 147' according to other embodiments. The shim fixing pin 147' may replace the shim fixing pin 147 of FIGS. 3 to 7.

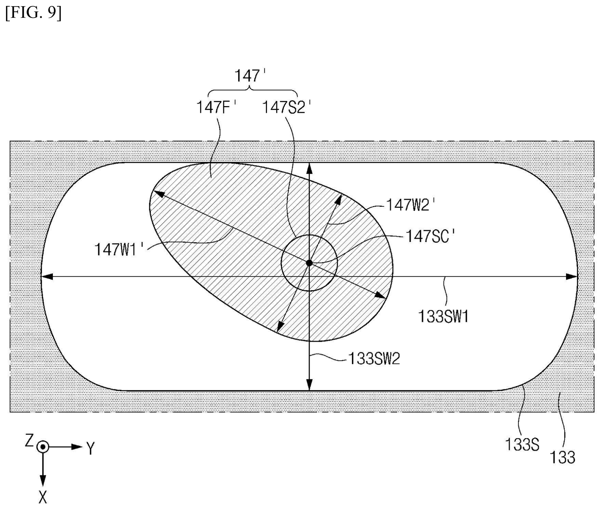

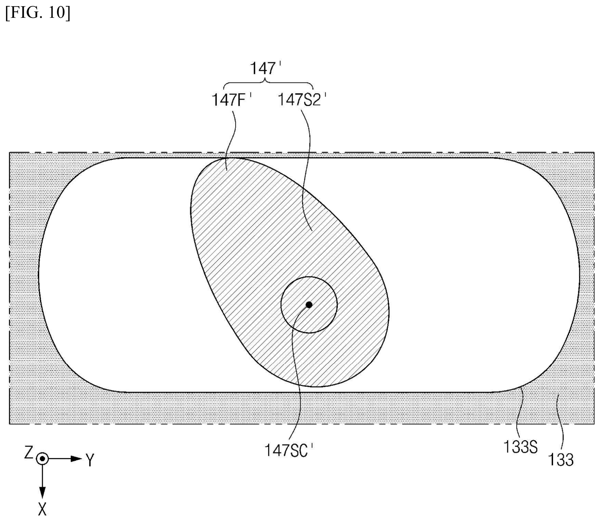

FIGS. 9 and 10 are plan views for describing an effect of the shim fixing pin 147' according to other embodiments.

Referring to FIGS. 8 to 10, the shim fixing pin 147' may include a flange 147F' and a second shank portion 147S2'. Similar to the shim fixing pin 147 of FIG. 6, the shim fixing pin 147' may further include a first shank portion. The first shank portion may be spaced apart from the second shank portion 147S2' with the flange 147F' therebetween.

The flange 147F' may be an arbitrary closed round figure. The flange 147F' may have a variable radius. The flange 147F' may have a non-uniform radius. Here, the radius of the flange 147F' may be defined as a horizontal distance from a center 147SC' of the second shank portion 147S2' to one point on the flange 147F'. Here, a horizontal distance between two points may be a distance between two points orthogonally projected to the same XY plane.

According to embodiments, the radius of the flange 147F' may continuously change according to a position angle with respect to the X-axis direction. In the example of FIG. 8, except for the finite number of poles 147E1' and 147E2' on the flange 147F', a rate of change according to an angle of the radius of the flange 147F' may not be zero. At the poles 147E1' and 147E2' on the flange 147F', the rate of change according to the angle of the radius of the flange 147F' may be substantially zero.

Here, a distance between the poles 147E1' and 147E2' on the flange 147F' may be a maximum horizontal length 147W1' of the flange 147F'. The center 147SC' of the second shank portion 147S2' may be on a straight line connecting the poles 147E1' and 147E2'.

The maximum horizontal length 147W1' of the flange 147F' may be substantially the same as the sum of a first radius 147W11 that is a horizontal distance between the pole 147E1' and the center 147SC' of the second shank portion 147S2' and a second radius 147W12 that is a horizontal distance between the pole 147E2' and the center 147SC' of the second shank portion 147S2'. The first radius 147W11 may be different from the second radius 147W12. The first radius 147W11 may be greater than the second radius 147W12. Accordingly, the center of gravity of the flange 147F' on the XY plane may be spaced apart from the center 147SC' of the second shank portion 147S2' on the XY plane.

A length 133SW1 of the long side of the slot 133S may be greater than the maximum horizontal length 147W1' of the flange 147F', and a length 133SW2 of the short side of the slot 133S may be less than the maximum horizontal length 147W1' of the flange 147F'. Due to the dimensions of the slot 133S and the flange 147F', the shim fixing pin 147' may be configured to be rotated with the first shank portion and/or the second shank portion 147S2' as an axis.

As shown in FIGS. 9 and 10, the flange 147F' has an amorphous shape, and thus, according to a direction (i.e., a rotation direction) of the flange 147F', a position of the slot 133S relative to the center of the flange 147F' in the X-axis direction may be moved, and a position of the spacer shim 133 relative to the first die 110 (see FIG. 3) in the X-axis direction may be adjusted.

### (Fourth Embodiment)

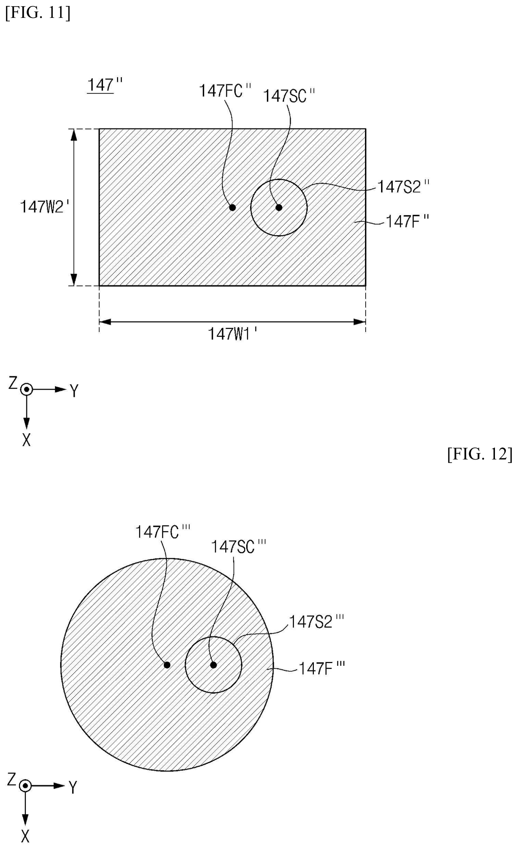

FIG. 11 is a plan view for describing a shim fixing pin 147" according to other embodiments. The shim fixing pin 147" may replace the shim fixing pin 147 of FIGS. 3 to 7.

Referring to FIG. 11, the shim fixing pin 147" may include a flange 147F" and a second shank portion 147S2". The shim fixing pin 147" may further include a first shank portion, similar to the shim fixing pin 147 of FIG. 6. The first shank portion may be spaced apart from the second shank portion 147S2" with the flange 147F" therebetween.

According to embodiments, the flange 147F" may be a polygon. The flange 147F" shown in FIG. 11 has a rectangular shape but is provided only as an example and should not be understood as limiting the technical idea of the present disclosure in any sense. The flange 147F" may be a triangle or a polygon with five or more inner angles.

According to embodiments, a center of gravity 147FC" of the flange 147F" may be horizontally spaced apart from a center 147SC" of the second shank portion 147S2". Accordingly, relative positions of the center 147SC" of the second shank portion 147S2" and the spacer shim 133 (see FIG. 5) may be adjusted according to a direction of the shim fixing pin 147" (i.e., an orientation of the flange 147F" according to the rotation of the shim fixing pin 147").

### (Fifth Embodiment)

FIG. 12 is a plan view for describing a shim fixing pin 147‴ according to other embodiments. The shim fixing pin 147‴ may replace the shim fixing pin 147 of FIGS. 3 to 7.

Referring to FIG. 12, the shim fixing pin 147‴ may include a flange 147F‴ and a second shank portion 147S2"'. The shim fixing pin 147‴ may further include a first shank portion, similar to the shim fixing pin 147 of FIG. 6. The first shank portion may be spaced apart from the second shank portion 147S2‴ with the flange 147F‴ therebetween.

According to embodiments, the flange 147F‴ may have a circular shape. According to embodiments, a center 147FC‴ of the flange 147F‴ may be horizontally spaced apart from a center 147SC‴ of the second shank portion 147S2‴. Accordingly, relative positions of the center 147SC‴ of the second shank portion 147S2‴ and the spacer shim 133 (see FIG. 5) in the X-axis direction may be adjusted according to a direction of the shim fixing pin 147‴ (i.e., an orientation of a straight line connecting the center 147FC‴ and the center 147SC‴ of the second shank portion 147S2‴ according to the rotation of the shim fixing pin 147‴).

The present disclosure has been described above in more detail with reference to the drawings, the embodiments, etc. However, the configurations illustrated in the drawings or embodiments described in the present specification are only examples of the present disclosure and do not reflect all the technical ideas of the present disclosure and thus it should be understood that various equivalents and modifications that replace the configurations would have been made at the filing date of the present application.

## Claims

1. A die coater comprising:
a first die including a land portion and a manifold, the manifold having a certain depth from the land portion and configured to accommodate an electrode slurry;
a body shim coupled to the first die, wherein the body shim includes a body extending in a first direction and wings protruding in a second direction from an end portion of the body in the first direction, and the second direction is perpendicular to the first direction;
a spacer shim coupled to the first die and partially covering the manifold; and
a shim fixing pin configured to fix the spacer shim to the land portion of the first die,
wherein the spacer shim includes a slot into which the shim fixing pin is inserted,
the shim fixing pin includes a shank portion and a flange connected to the shank portion, and
the shim fixing pin is configured to be rotated with respect to the spacer shim with the shank portion as an axis.

2. The die coater of claim 1, wherein a long side of the slot has a first length and a short side of the slot has a second length less than the first length, and
a maximum horizontal length of the flange is less than the first length and greater than the second length.

3. The die coater of claim 1, wherein a planar shape of the flange is an oval shape.

4. The die coater of claim 1, wherein a planar shape of the flange is a circular shape, and
a center of the flange and a center of the shank portion are spaced apart from each other in a direction parallel to the flange.

5. The die coater of claim 1, wherein a planar shape of the flange is a polygonal shape.

6. The die coater of claim 5, wherein a center of gravity of the flange and the center of the shank portion are spaced apart from each other in the direction parallel to the flange.

7. The die coater of claim 1, wherein a planar shape of the flange is a closed round shape with a variable radius.

8. The die coater of claim 7, wherein a center of gravity of the flange and a center of the shank portion are spaced apart from each other in a direction parallel to the flange.

9. The die coater of claim 7, wherein the flange includes a first pole and a second pole, and
a distance between the first and second poles is a maximum horizontal distance of the flange.

10. The die coater of claim 9, wherein a rate of change according to an angle of the radius at the first pole and the second pole is zero.

11. The die coater of claim 9, wherein a horizontal distance between the first pole and the center of the shank portion is different from a horizontal distance between the second pole and the center of the shank portion.

12. The die coater of claim 1, wherein relative positions of the first die and the spacer shim are adjusted by the rotation of the shim fixing pin.

13. A die coater comprising:
a first die with a manifold;
a spacer shim coupled to the first die and partially covering the manifold; and
a shim fixing pin configured to fix the spacer shim to a land portion of the first die,
wherein the spacer shim includes a slot into which the shim fixing pin is inserted,
the shim fixing pin includes a shank portion and a flange connected to the shank portion, and
a center of gravity of the flange and a center of the shank portion are spaced apart from each other in a direction parallel to the flange.

14. The die coater of claim 13, wherein a long side of the slot has a first length and a short side of the slot has a second length less than the first length, and
a maximum horizontal length of the flange is less than the first length and greater than the second length.
